# EUROPÄISCHE PATENTSCHRIFT

(11) **EP 1 020 486 B1**
(45) Veröffentlichungstag und Bekanntmachung des Hinweises auf die Patenterteilung: **05.06.2002**
(21) Anmeldenummer: 99124886.5
(22) Anmeldetag: 16.12.1999
(51) Int. Cl.: C08G 77/08, C08K 5/3442, C08K 5/3467

(54) **Basische Kondensationskatalysatorsysteme für Siloxane**
Basic condensation catalyst compositions for siloxanes
Systèmes de catalyseurs basiques pour siloxanes

(30) Priorität: 14.01.1999 DE 19901191
(43) Veröffentlichungstag der Anmeldung: 19.07.2000
(73) Patentinhaber: Wacker-Chemie GmbH, 81737 München (DE)
(72) Erfinder: Baumann, Frank Dr., 84561 Mehring (DE); Deubzer, Bernward, Dr., 84489 Burghausen (DE); Delagnes, Chantal, 77310 Saint Fargeau (FR)
(74) Vertreter: Fritz, Helmut, Dr.

(56) Entgegenhaltungen:
- EP-A- 0 023 187
- EP-A- 0 039 299
- EP-A- 0 180 527
- FR-A- 2 398 079

## Beschreibung

Die Erfindung betrifft ein Verfahren zur Kondensation von Silanolgruppen tragenden Verbindungen, bei dem basische Katalysatorsysteme eingesetzt werden.

Unter basischen Kondensations- und Equilibrierungskatalysatoren werden im folgenden Verbindungen verstanden, die in Wasser direkt oder durch ihre Hydrolyseprodukte einen pH- Wert > 7 erzeugen wie Metallhydroxide oder Metallalkoxide der I und II Hauptgruppe des Periodensystems, oder Ammoniumhydroxide wie Butyltrimethylammoniumhydroxid (BTAH) oder Tetramethylammoniumhydroxid (TMAH) etc.
Derartige basische Kondensations- und Equilibrierungskatalysatoren werden in der Siliconchemie hauptsächlich zur Herstellung von Aminogruppen tragenden Siloxanen und bei Harzsynthesen wie z. B. MQ-Harze verwendet. Ebenfalls Anwendung finden basische Katalysatoren bei der makroskopischen Gelierung von Alkoxysilanen für Vorstufen von Aero- und Xerogelen.
Ein weiteres Einsatzgebiet von nicht sauren Kondensationskatalysatoren ist die Vulkanisation von Siliconkautschukmassen mit metallorganischen Verbindungen, z. B. Zinnverbindungen.

Der Nachteil der oben beschriebenen Katalysatoren ist, dass sie neben der Kondensations- zugleich immer auch die Equilibrierungsreaktion katalysieren oder die Kondensationsgeschwindigkeit ist zu gering. Die einzigen reinen Kondensationskatalysatoren bilden die Zinnverbindungen, diese sind aber nicht geeignet um Organosiloxane zu höheren Molmassen zu kondensieren. Zur Optimierung der Kondensationseigenschaften von Alkali- und Erdalkalimetallen werden als Zusätze beispielsweise in EP-B-23 187 Krypanten oder in EP-A-180 527 Trioxoalkylamine beschrieben. Der Nachteil dieser Katalysatorsysteme ist ihre hohe Polarität und damit ihre Unverträglichkeit mit den Siloxanen.

Es bestand die Aufgabe, ein Verfahren zur Polykondensation von Organosiloxanen zu entwickeln, bei dem nicht die Equilibrierung katalysiert wird und mit dem hohe Molmassen erreicht werden können.

Gegenstand der Erfindung ist ein Verfahren zur Kondensation von Silanolgruppen tragenden Verbindungen, die mindestens eine Einheit der allgemeinen Formel (III)

A_{c}E_{d}SiO _{(4-c-d)/2} (III),

besitzen, in der
- **A**: eine Hydroxygruppe,
- **E**: einen inerten Rest,
- **c**: den Wert 1, 2, 3 oder 4 und
- **d**: den Wert 0, 1 oder 2 bedeuten,
mit der Maßgabe, daß c + d ≤ 4,
bei dem mit einem Katalysatorsystem umfassend Katalysator, der ausgewählt wird aus basischen Alkali- und Erdalkalimetallverbindungen und linearer Cokatalysator, der ein mindestens zweizähniger Chelatligand ist und 1 bis 20 Einheiten der allgemeinen Formel (I)

N-R¹- N (I),

enthält, in der
- **R**^{**1**}: einen zweiwertigen linearen, cyclischen und/oder aromatischen C₁- bis C₃₀-Kohlenwasserstoffrest bedeutet, höher molekulare Organosiloxanverbindungen hergestellt werden.

Mit Hilfe dieser Katalysatorsysteme können Silanolgruppen tragende Verbindungen ohne zu equilibrieren zu höher molekularen Verbindungen polykondensiert werden.

Der Katalysator besteht aus einer Alkali- oder Erdalkalimetallverbindung oder aus einem Gemisch aus Alkaliund Erdalkalimetallverbindung, die in Wasser einen pH-Wert > 7.0 erreicht und vorzugsweise der allgemeinen Formel (II),

Mₐ - (R²)_{b} (II),

entspricht, in der
- **M**: ein Alkali- oder Erdalkalimetallatom,
- **R**^{**2**}: einen in Wasser basisch reagierenden einwertigen Rest, wie Hydroxyl-, Amin-, C₁- bis C₁₈-Alkoxy-, Silikatrest, einen in Wasser zu einer basisch reagierenden Verbindung abreagierenden Rest, wie Wasserstoff-, Amid-, C₁- bis C₃₀-Kohlenwasserstoffrest oder eine oxidische Metallverbindung,
- **a**: die Werte 1 und 2, bei Alkalimetallen bevorzugt den Wert 1,
- **b**: die Werte 1 und 2 bedeuten, mit der Maßgabe, dass bei Alkalimetallen **b** nur den Wert 1 annehmen kann.

Vorzugsweise bedeutet **M** Lithium, Natrium, Kalium, Rubidium, Cäsium, Calcium, Strontium und Barium, insbesondere Lithium und Barium.
Vorzugsweise bedeutet die C₁- bis C₁₈-Alkoxygruppe **R**^{**2**} einen Methoxy- oder der Ethoxyrest. Vorzugsweise ist der C₁- bis C₃₀-Kohlenwasserstoffrest **R**^{**2**} ein Propyl- oder Butylrest.

Bevorzugte Reste **R**^{**1**} sind C₁- bis C₄-Kohlenwasserstoffreste, insbesondere der C₂-Rest.

Bei den Cokatalysatoren handelt es sich dabei um lineare Verbindungen, die mindestens eine und maximal 20 Einheiten der allgemeinen Formel (I) enthalten. Beispiele hierfür sind 3,5-Diazacyclohexan, 3,5,7-Triazacyclooctan und Ethylendiaminoligomere der allgemeinen Formel H₂N-(CH₂CH₂NH)ₓ-H, wobei x eine ganze Zahl von 1 bis 20 sein kann.

Besonders bevorzugt sind dabei die linearen Verbindungen, die 1 bis 5 Einheiten der allgemeinen Formel (I) enthalten. Beispiele hierfür sind Ethylendiamin, Diethylentriamin, Triethylentetramin und Tetraethylenpentamin.

Vorzugsweise bedeutet der Rest **E** einen einwertigen, gegebenenfalls halogen- oder cyanosubstituierten, über SiC gebundenen C₁- bis C₃₀-Kohlenwasserstoffrest, insbesondere C₁bis C₆-Kohlenwasserstoffrest, wie Methyl-, Ethyl- und Phenylrest.

Die Silanolgruppen tragende Verbindung kann auch erst während eines Reaktionsschrittes, z. B. durch die Hydrolyse eines Chlorsilans entstehen und dann an der Kondensationsreaktion teilnehmen.

In den nachstehend beschriebenen Beispielen beziehen sich alle Angaben von Teilen und Prozentsätzen, falls nicht anders angegeben, auf das Gewicht. Sofern nicht anders angegeben, wurden die nachstehenden Beispiele bei einem Druck der umgebenden Atmosphäre, also etwa 1000 hPa durchgeführt.

### Beispiele

### Beispiel 1

Eine Mischung aus 450g (0.198 mol) eines α,ω-OH-terminierten Siloxanes mit einer Kettenlänge von ca. 34 Me₂SiO-Einheiten (Me-Siloxan) und 50g eines trimethylsilylterminierten Siloxanes mit einer Kettenlänge von 35 Me₂SiO-Einheiten (Ak35) werden mit 0.9g (1800ppm) Diethylentriamin als Cokatalysator versetzt. Die Mischung wird auf 80°C erwärmt.
Danach werden 3.0g (600 ppm) einer 10-%-igen Lithiumhydroxidlösung in Wasser zugegeben und ein Vakuum von 200mbar an das Reaktionsgefäß angelegt, wobei das Lösungswasser und das bei der Polykondensation entstehende Wasser aus dem Reaktionsgemisch entfernt und über einen Wasserabscheider abgetrennt wird. Während der Reaktion ist eine starker Viskositätsanstieg zu beobachten. Nach vier Stunden Reaktionszeit wird der Katalysator mit 1.5g Eisessig neutralisiert. Es wird 1 Stunde bei 80°C nachgerührt, auf Raumtemperatur abgekühlt und abfiltriert.

Das Produkt hat eine Viskosität von 14500 m Pas. Weiter detektiert man in der GPC eine bimodale Molmassenverteilung. Der niedermolekulare Peak kann dabei eindeutig dem niedermolekularen trimethylsilylterminierten Siloxan mit einer Kettenlänge von 35 Me₂SiO-Einheiten zugeordnet werden. Somit kann gezeigt werden, daß das verwendete Katalysatorsystem nicht equilibrierend wirkt. Ein weiterer Nachweis dieser Eigenschaft ist, daß bei der Reaktion keine Octamethylcyclotetrasiloxan-Cyclen (D₄) gebildet werden, die immer als Nebenprodukt einer Equilibrierungsreaktion (s. Vergleichsbeispiele V2a bis V2e) anfallen was sich auch anhand der ²⁹Si-NMR Daten nachweisen läßt.

### Beispiel 2

Die Reaktion wird analog Beispiel 1 gefahren. Es wird nur der Katalysator gewechselt. Man verwendet 3g eine 10-%igen Bariumhydroxidlösung.

Das erhaltenen Produkt hat eine Viskosität von ca. 200 000 mPas. In der GPC erhält man das gleiche Ergebnis wie im Beispiel 1.

### Beispiel 3 ( Variation des Cokatalysators)

Die Reaktion wird analog Beispiel 1 gefahren. Es wird nur der Cokatalysator gewechselt. Die Beispiele und die Ergebnisse sind in Tabelle 1 zusammengestellt.

**Tabelle 1**

| Beispiel | Cokatalysator | Viskosität | GPC | D4-.Anteil |
|---|---|---|---|---|
| 3a | Ethylendiamin | 15 000 | Bimodal | < 0.5 mol-% |

### Vergleichsbeispiele

### Vergleichsbeispiel 1

Die Reaktion wird analog Beispiel 1 gefahren. Es wird aber kein Cokatalysator verwendet.
Die erhaltene Viskosität liegt bei ca. 1000 mPas. In der GPC wird eine multimodale Verteilung von niedermolekularen Organosiloxanen erhalten. Ohne Cokatalysatorzusatz wird keine hohe Molmassse bei der Polykondensation mit LiOH erreicht.

### Vergleichsbeispiel 2

Die Reaktion wird analog Beispiel 1 gefahren. Als Katalysator werden aber die in der Tabelle 2 aufgeführten Alkalimetallhydroxide in 50-%iger Lösung in Wasser verwendet.

**Tabelle 2**

| Beispiel | Katalysator | Viskosität | D4 | GPC |
|---|---|---|---|---|
| V2a | NaOH | 3200 | 3.5 | Monomodal |
| V2b | KOH | 2200 | 8.0 | Monomodal |
| V3c | RbOH | 2300 | 10.0 | Monomodal |
| V4d | CsOH | 2400 | 10.0 | Monomodal |
| V4e | BTAH* | 2200 | 7.0 | Monomodal |

| | | | | |
|---|---|---|---|---|
| *Butyltrimethylammoniumhydrochlorid | | | | |

In der GPC erhält man eine monomodale Verteilung. Zudem weisen die erhaltenen Viskositäten und D₄ Bestandteile deutlich darauf hin, daß eine Equilibrierungsreaktion mit dem Ak35 gleichzeitig zur Polykondensation des Me-Siloxans stattgefunden hat und sich somit eine niedrigere mittlere Kettenlänge als bei einer reinen Polykondensation einstellt.

## Patentansprüche

1. Verfahren zur Kondensation von Silanolgruppen tragenden Verbindungen, die mindestens eine Einheit der allgemeinen Formel (III)
A_{c}E_{d}SiO _{(4-c-d)/2} (III),
besitzen, in der
**A** eine Hydroxygruppe,
**E** einen inerten Rest,
**c** den Wert 1, 2, 3 oder 4 und
**d** den Wert 0, 1 oder 2 bedeuten,
mit der Maßgabe, daß c + d ≤ 4,
bei dem mit einem Katalysatorsystem umfassend Katalysator, der ausgewählt wird aus basischen Alkali- und Erdalkalimetallverbindungen und
linearer Cokatalysator, der ein mindestens zweizähniger Chelatligand ist und 1 bis 20 Einheiten der allgemeinen Formel (I)
N-R¹- N (I),
enthält, in der
**R**^{**1**} einen zweiwertigen linearen, cyclischen und/oder aromatischen C₁- bis C₃₀-Kohlenwasserstoffrest bedeutet, höher molekulare Organosiloxanverbindungen hergestellt werden.

2. Verfahren nach Anspruch 1, bei dem **E** einen einwertigen, gegebenenfalls halogen- oder cyanosubstituierten, über SiC gebundenen C₁- bis C₃₀-Kohlenwasserstoffrest bedeutet.

3. Verfahren nach Anspruch 1 oder 2, bei dem der Katalysator aus einer Alkali- oder Erdalkalimetallverbindung oder aus einem Gemisch aus Alkali- und Erdalkalimetallverbindung besteht, die in Wasser einen pH-Wert > 7.0 erreicht und der allgemeinen Formel (II),
Mₐ - (R²)_{b} (II),
entspricht, in der
**M** ein Alkali- oder Erdalkalimetallatom,
**R**^{**2**} einen in Wasser basisch reagierenden einwertigen Rest, einen in Wasser zu einer basisch reagierenden Verbindung abreagierenden Rest, oder eine oxidische Metallverbindung,
**a** die Werte 1 und 2, bei Alkalimetallen bevorzugt den Wert 1,
**b** die Werte 1 und 2 bedeuten, mit der Maßgabe, dass bei Alkalimetallen **b** nur den Wert 1 annehmen kann.

4. Verfahren nach Anspruch 3, bei dem **M** Lithium oder Barium bedeutet.

5. Verfahren nach Anspruch 3 oder 4, bei dem **R**^{**2**} ein Hydroxylrest ist.

6. Verfahren nach Anspruch 3 bis 5, bei dem **R**^{**1**} C₁- bis C₄-Kohlenwasserstoffreste sind.

## Claims

1. Process for the condensation of compounds which carry silanol groups and have at least one unit of the general formula (III)
A_{c}E_{d}SiO_{(4-c-d)/2} (III)
in which
A is a hydroxyl group,
E is an inert radical,
C is the value 1, 2, 3 or 4 and
d is the value 0, 1 or 2,
with the proviso that c + d ≤ 4,
in which, with a catalyst system comprising a catalyst which is chosen from basic alkali metal and alkaline earth metal compounds and a linear cocatalyst which is an at least bidentate chelating ligand and contains 1 to 20 units of the general formula (I)
N-R¹-N (I)
in which
R¹ is a divalent linear, cyclic and/or aromatic C₁- to C₃₀-hydrocarbon radical,
higher molecular weight organosiloxane compounds are prepared.

2. Process according to Claim 1, in which E is a monovalent, optionally halogen- or cyano-substituted C₁- to C₃₀-hydrocarbon radical bonded via SiC.

3. Process according to Claim 1 or 2, in which the catalyst comprises an alkali metal compound or alkaline earth metal compound or a mixture of alkali metal compounds and alkaline earth metal compounds which achieves a pH of > 7.0 in water and corresponds to the general formula (II)
Mₐ - (R²)_{b} (II)
in which
M is an alkali metal atom or alkaline earth metal atom,
R² is a monovalent radical with a basic reaction in water, a radical which reacts in water to give a compound with a basic reaction, or an oxidic metal compound,
a is the values 1 and 2, and in the case of alkali metals preferably the value 1,
b is the values 1 and 2, with the proviso that in the case of alkali metals b can only assume the value 1.

4. Process according to Claim. 3, in which M is lithium or barium.

5. Process according to Claim 3 or 4, in which R² is a hydroxyl radical.

6. Process according to Claims 3 to 5, in which R¹ is C₁- to C₄-hydrocarbon radicals.

## Revendications

1. Procédé pour la condensation de composés portant des groupes silanol, qui comportent au moins une unité de formule générale (III)
A_{c}E_{d}SiO_{(4-c-d)/2} (III)
dans laquelle
**A** représente le groupe hydroxy,
**E** représente un radical inerte,
**c** a la valeur 1, 2, 3 ou 4 et
**d** a la valeur 0, 1 ou 2,
étant entendu que c + d • 4,
dans lequel on prépare des composés de type organosiloxane de masse moléculaire élevée, à l'aide d'un système catalytique comprenant un catalyseur qui est choisi parmi des composés à base de métaux alcalins et alcalino-terreux et un co-catalyseur linéaire qui est un ligand au moins bidenté et contient de 1 à 20 unités de formule générale (I)
N-R¹-N (I)
dans laquelle
**R**^{**1**} représente un radical hydrocarboné divalent linéaire, cyclique et/ou aromatique en C₁-C₃₀.

2. Procédé selon la revendication 1, dans lequel **E** représente un radical hydrocarboné monovalent en C₁-C₃₀ éventuellement substitué par un atome d'halogène ou par le groupe cyano, lié par l'intermédiaire de SiC.

3. Procédé selon la revendication 1 ou 2, dans lequel le catalyseur consiste en un composé à base de métal alcalin ou alcalino-terreux ou en un mélange de composé à base de métal alcalin et de composé à base de métal alcalino-terreux, qui atteint dans l'eau un pH > 7,0 et correspond à la formule générale (II)
Mₐ - (R²)_{b} (II)
dans laquelle
**M** représente un atome de métal alcalin ou alcalino-terreux,
**R**^{**2**} représente un radical monovalent à réaction basique dans l'eau, un radical réagissant dans l'eau pour donner un composé à réaction basique, ou un composé métallique de type oxyde,
**a** représente les valeurs 1 et 2, dans le cas des métaux alcalins de préférence la valeur 1,
**b** représente les valeurs 1 et 2, étant entendu que dans le cas des métaux alcalins il ne peut prendre que la valeur 1.

4. Procédé selon la revendication 3, dans lequel **M** représente le lithium ou le baryum.

5. Procédé selon la revendication 3 ou 4, dans lequel R² est le groupe hydroxy.

6. Procédé selon l'une quelconque des revendications 3 à 5, dans lequel R¹ représente des radicaux hydrocarbonés en C₁-C₄.
